# EUROPÄISCHE PATENTSCHRIFT

(11) **EP 2 458 328 B1**
(45) Veröffentlichungstag und Bekanntmachung des Hinweises auf die Patenterteilung: **27.01.2016**
(21) Anmeldenummer: 10192443.9
(22) Anmeldetag: 24.11.2010
(51) Int. Cl.: G01C 15/10

(54) **Konstruktionsvermessungsgerät mit einer automatischen Lotpunktfindungs-Funktionalität**
Construction measuring device with an automatic plumbing point finding function
Dispositif de mesure et de construction doté d'une fonctionnalité de recherche de point d'aplomb automatique

(43) Veröffentlichungstag der Anmeldung: 30.05.2012
(73) Patentinhaber: Leica Geosystems AG, 9435 Heerbrugg (CH)
(72) Erfinder: Schroeder, Frank, CH-9000 St. Gallen (CH); Schorr, Christian, CH-9000, St. Gallen (CH)
(74) Vertreter: Kaminski Harmann

(56) Entgegenhaltungen:
- DE-A1- 4 443 413
- JP-A- 2006 023 237
- US-A1- 2010 123 892

## Beschreibung

Die Erfindung betrifft ein Konstruktionsvermessungsgerät zum Vermessen und Markieren von Raumpunkten im Rahmen von Bau und/oder Ausbau - insbesondere Innenausbau - von Gebäuden nach dem Oberbegriff des Anspruchs 1 und ein zugehöriges Verfahren nach Anspruch 9 zur Lotpunktfindung mit einem solchen Konstruktionsvermessungsgerät sowie ein Computerprogrammprodukt zur Bereitstellung, Steuerung und Durchführung des erfindungsgemässen Verfahrens nach dem Oberbegriff des Anspruchs 15.

Zur Vermessung und Markierung von Raumpunkten im Rahmen von Bau oder Ausbau von Gebäuden sind eine Vielzahl von technischen Anordnungen und Verfahren bekannt. Zur Erfüllung komplexer Vermessungsaufgaben, insbesondere in einem freien Gelände, werden seit einer Vielzahl von Jahren geodätische Totalstationen bzw. Theodoliten, wie sie im gattungsgemässen Stand der Technik bekannt sind, eingesetzt. Solche Geräte sind grundsätzlich technisch auch zur Erfüllung einer Lotpunktfindungs-Funktionalität, beispielsweise bei einem Innenausbau eines Gebäudes, geeignet. Allerdings handelt es sich dabei um technisch relativ komplexe und kostspielige Geräte, deren Bedienung für einen nicht speziell in Vermessungstechnik ausgebildeten Benutzer, wie beispielsweise einen in einem Gebäude-Innenausbau arbeitenden Handwerker, im allgemeinen auch zu aufwendig und kompliziert ist.

Aus diesen Gründen erscheinen eine Vorrichtung und ein Verfahren zur Vermessung von unebenen oder ebenen Flächen eines offenen oder geschlossenen Raumes, beispielsweise eines Gebäudezimmers, wobei ein mit einem Theodoliten gekoppelter Entfernungsmesser verwendet wird und wie es in der FR 2 630 539 vorgeschlagen wird, für eine einfach durchführbare Innenvermessung von Räumen wenig geeignet.

Zur Bestimmung eines Lots und zugehöriger Vermessungs- bzw. Markierungspunkte in einem Gebäuderaum wird vielfach immer noch ein konventionelles Senklot verwendet. Dabei muss der obere Punkt des Senklots für einen Benutzer physisch erreichbar sein, was in hohen Räumen schwierig oder gar nahezu unmöglich sein kann (beispielsweise in hohen Hallen oder Kirchenräumen).

Zur Unterstützung einer konventionellen Lotbestimmung mittels eines Senklots oder als eine Alternative zur Verwendung eines Senklots ist ebenfalls die Verwendung von Vermessungsgeräten basierend auf Aussendung von Laserstrahlen und Empfang von deren Reflexion von einem als Lotpunkt vorgesehenen Raumpunkt bekannt. Beispielsweise sind derartige Geräte so ausgelegt und ausgebildet, dass - nach Bringen der Laserlichtquelle in eine gewünschte vorgegebene Position - im Wesentlichen selbstzentriert ein lotrechter Laserstrahl emittiert wird und somit der sich lotrecht direkt über oder unter der vorgegebenen Position befindende Raumpunkt mit einem Laserstrahl angezeigt und/oder markiert wird. Die JP 2006 023237 A offenbart ein Vermessungsgerät mit einer Lotpunktfindungs-Funktionalität.

Die DE 196 48 626 offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp- und Dreheinrichtung zur Ausrichtung und Richtungsmessung, ein Zielfernrohr sowie eine elektronische Auswerteeinheit zur Winkeldaten- und Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, wird in der DE 196 48 626 nicht offenbart. Insbesondere gibt es in dieser Schrift keinerlei Hinweise für Möglichkeiten zu einer Lotpunktfindung.

Eine ähnliche Vorrichtung und zugehörige Vermessungsmethode werden in der DE 195 43 299 offenbart. Auch dieser Offenlegungsschrift sind keine Hinweise auf eine automatisierte sequentielle Vermessung mehrerer Raumpunkte, vergleichsweise beispielsweise mit einem Scan, und insbesondere keine Beschreibung zu Möglichkeiten für eine Lotpunktfindung, zu entnehmen.

Eine weitere ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird auch eine Ausführungsform zur Durchführung absoluter Vermessungen und Markierungen offenbart, wozu eine System-Nivellierung durchgeführt wird, die das mathematische Modell zur Berechnung der Raumpunktkoordinaten in Beziehung zu den tatsächlichen Richtungen im Raum in Beziehung setzt, womit grundsätzlich auch eine Fällung von Loten im Raum möglich sei.

Es wird jedoch keine automatisch ablaufende Lotpunktfindungs-Funktionalität ausgehend von lediglich einem definierten, ersten Raumpunkt offenbart, ebenso wenig wie eine automatisierte sequentielle Vermessung mehrerer Raumpunkte, zu vergleichen beispielsweise mit einem Scan.

Eine Lotpunktfindung mit relativ einfachen Vermessungsgeräten basierend auf Laservermessung gewährleistet einen relativ grossen Arbeits- bzw. Distanzbereich zu einem vorgesehenen oder nachzumessenden Lotpunkt, verbunden mit relativ hoher Genauigkeit. Allerdings muss gemäss der aus dem Stand der Technik bekannten Vorrichtungen der Emissionspunkt des Lasers eben direkt über oder unter der vorgegebenen Position für den als Lotpunkt vorgesehenen Raumpunkt angeordnet sein, mit exakt lotrechter Ausrichtung des Laserstrahls.

Bei grösserer Entfernung des Lasers vom anvisierten Raumpunkt kann dessen visuelle Erkennung schwierig sein. Ein weiteres signifikantes Problem besteht dann, wenn die direkte optische bzw. visuelle Verbindung zwischen dem Emissionspunkt bzw. Empfangspunkt reflektierter Strahlung, beispielsweise durch zum Zielpunkt in Zielrichtung zwischenbefindliche Objekte, blockiert ist. Für eine Lotvermessung in einer derartigen Situation kommt im Wesentlichen, gemäss der bekannten Lehre, nur der Einsatz komplexer Vermessungssysteme wie Totalstationen oder Theodoliten in Frage, was aber wegen des vorgenannten technischen bzw. ökonomischen Aufwands kaum geboten erscheint, oder ein sehr aufwendiges Vermessungsverfahren gestützt auf vorgenannte Vermessungssysteme, beispielsweise unter Vermessung zusätzlicher räumlicher Stützpunkte und deren räumlicher Korrelation durch den Bediener, was aber fundierte geometrische Kenntnisse des Benutzers voraussetzt, über die ein nicht einschlägig ausgebildeter Benutzer im allgemeinen nicht verfügt und des Weiteren den Vermessungsprozess sehr kompliziert, insbesondere zeitaufwendig, gestalten würde.

Aufgabe der Erfindung ist die Bereitstellung eines verbesserten Konstruktionsvermessungsgeräts, insbesondere zur Lotpunktbestimmung für den Innenausbau von Gebäuden, mit dem bestehende Nachteile gemäss dem Stand der Technik überwunden werden können. Aufgabe ist dabei besonders, ein einfaches Vermessungssystem und ein zugehöriges Vermessungsverfahren, gestützt durch ein zugehöriges Computerprogramm, bereitzustellen, womit auch für einen nicht speziell in der Vermessungstechnik ausgebildeten Bediener eine einfache Lotpunktbestimmung und -markierung ermöglicht wird.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Gegenstand der Erfindung ist ein Konstruktionsvermessungsgerät zum Vermessen und Markieren von Raumpunkten im Rahmen von Bau und/oder Ausbau - insbesondere Innenausbau - von Gebäuden. Das System umfasst eine Basis und ein an der Basis um eine Drehachse drehbar gelagertes Oberteil. Am Oberteil ist eine um eine Schwenkachse schwenkbar gelagerte, mit einer zur Emission eines Laserstrahls ausgebildeten Laserquelle und einem Laserlicht-Detektor ausgestattete Anzieleinheit angeordnet, welche eine Distanzmessfunktionalität bereitstellt. Das erfindungsgemässe Konstruktionsvermessungsgerät umfasst des Weiteren eine Auswerte- und Steuereinheit.

Das System umfasst dabei einen ersten und zweiten Drehantrieb welche das Oberteil bzw. die Anzieleinheit antreibbar bzw. ausrichtbar machen. Eine räumliche Ausrichtung der Anzieleinheit gegenüber der Basis ist über zwei Winkelmesser erfassbar. Insbesondere sind dabei - bei horizontierter Aufstellung des Geräts bzw. der Basis des Geräts - die Winkelmesser zur Bestimmung eines Azimut- und eines Elevationswinkels zum anvisierten Raumpunkt ausgebildet. Die Auswerte- und Steuereinheit sind mit der Laserquelle, dem Laserlicht-Detektor sowie den Winkelmessern verbunden, um eine erfasste Distanz einer entsprechenden Ausrichtung zuzuordnen und somit Koordinaten für Raumpunkte zu bestimmen.

Erfindungsgemäss weist das Konstruktionsvermessungsgerät eine Lotpunktfindungs-Funktionalität auf, welche nach Auslösung zumindest teilweise automatisch abläuft. Mithilfe der Lotpunktfindungs-Funktionalität wird, abhängig von einem bekannten, definierten ersten Raumpunkt, die Ausrichtung der Anzieleinheit derart automatisch gesteuert durch die Auswerte- und Steuereinheit mittels des ersten und/oder des zweiten Drehantriebs geändert, dass genau ein solcher auf einer Objekt-Oberfläche liegender zweiter Raumpunkt mit dem Laserstrahl angefahren und markiert wird, der auf einer den ersten Raumpunkt enthaltenden Lotrechten liegt. Dabei gelten insbesondere auch in einem definierten Toleranzbereich um die Lotrechte befindliche Raumpunkte als auf der Lotrechten liegend.

Dabei wird als Lotrichtung eine als vertikal angenommene bzw. definierte Richtung herangezogen, die vor oder während des Ablaufs der erfindungsgemässen Funktionalität relativ zur äusseren Umgebung bestimmt wird. Meist ist dies die Richtung des Schwerefeld-Vektors der Erde, die als Lotrichtung herangezogen wird. Die aktuelle Ausrichtung des Geräts bezüglich des Schwerefeld-Vektors der Erde wird erfindungsgemäß mit - insbesondere in die Basis des Geräts integrierten - Neigungssensormitteln bestimmt deren Messdaten ebenfalls an die Auswerte- und Steuereinheit übermittelt werden. Daraufhin kann dann die Bestimmung von Raumkoordinaten des jeweiligen Lotpunktes beruhen. Wie dem Fachmann bekannt, können die Neigungssensormittel dabei dazu ausgebildet sein, die Neigung gegenüber dem Schwerefeld (bzw. gegenüber einer senkrecht zum Schwerefeld ausgerichteten Horizontalebene) in zwei Richtungen (d.h. um zwei Achsen) zu bestimmen. Beispielsweise können dafür zwei ein-achsige Neigungssensoren oder ein zwei-achsiger Neigungssensor infrage kommen (wie optoelektronische Libellensensoren, ein optoelektronischer Öltopf oder eine optoelektronische Dosenlibelle). Ein Beispiel für einen solchen öltopfartigen Neigungssensor, mit welchem die Neigung zumindest um zwei Achsen bestimmen kann, ist detailliert in der Europäischen Patentanmeldung mit dem Anmeldungs-Aktenzeichen EP 10173726.0 (EP 2423640) A1 beschrieben.

Ferner kann die - dann insbesondere vorab zu erfolgende - Bestimmung der vertikalen Richtung, also der als vertikal angenommenen Lotrichtung, auch durch die Vermessung von Endpunkten eines frei pendelnd aufgehängten Lotstabs bzw. Senklots erfolgen.

Eine Richtung kann aber auch dann als die Lotrichtung bestimmt und angenommen werden, für die selbst kein Bezug zur Ausrichtung des Schwerefeld-Vektors hergestellt ist, beispielsweise die Senkrechte zu einer als horizontal verlaufend angenommenen Zimmerdecke. Zur vorab erfolgenden Bestimmung der Lotrichtung kann also auch z.B. eine Vermessung von mindestens drei Raumpunkten in einer als horizontal angenommenen Ebene (Decke, Fussboden) erfolgen, worauf dann wiederum die Bestimmung von Raumkoordinaten des Lotpunktes beruht. In diesem Fall kann dann also eine als horizontal ausgerichtet angenommene Ebene (wie eine Zimmerdecke) als äussere Referenz für die Lotrichtung herangezogen werden, auch wenn diese tatsächlich von der durch das Erdschwerefeld eigentlich definierten Vertikalen leicht abweicht (z.B. durch Ungenauigkeiten bei Konstruktion der Zimmerdecke, etc.).

Vorzugsweise wird im Rahmen der Lotpunktfindungs-Funktionalität die Ausrichtung der Anzieleinheit automatisch einem Suchschema folgend geändert und werden dabei Raumpunkte vermessen, bis der zweite Raumpunkt mit dem Laserstrahl erreicht ist.

Es wird des Weiteren bevorzugt, dass die Ausrichtung der Anzieleinheit solange automatisch iterativ sich dem zweiten Raumpunkt nähernd geändert wird und fortlaufend dabei Raumpunkte vermessen werden, bis der zweite Raumpunkt mit dem Laserstrahl erreicht ist.

Erfindungsgemäss werden typischerweise im Rahmen der Lotpunktfindungs-Funktionalität automatisch folgende Schritte solange sich wiederholend durchgeführt werden, bis der zweite Raumpunkt mit dem Laserstrahl erreicht ist:
- Vermessen eines aktuell angezielten Raumpunktes,
- Ermitteln eines mathematischen Durchtrittpunkts von der Lotrechten durch eine den aktuell angezielten Raumpunkt enthaltende horizontale Ebene und
- Ausrichten der Anzieleinheit in Richtung des ermittelten Durchtrittspunkts.

Beispielsweise wird - in Ausrichtung der Anzieleinheit auf den Azimutwinkel des ersten Raumpunkts - im Rahmen der Lotpunktfindungs-Funktionalität die elevative Ausrichtung der Anzieleinheit variiert, und es werden fortlaufend dabei Raumpunkte vermessen, bis der zweite Raumpunkt mit dem Laserstrahl erreicht ist.

Wenn sich die Anzieleinheit in einer vom Azimutwinkel des ersten Raumpunkts abweichenden azimutalen Ausrichtung befindet, wird im Rahmen der Lotpunktfindungs-Funktionalität die Anzieleinheit zunächst automatisch auf den Azimutwinkel des ersten Raumpunkts ausgerichtet.

Gemäss einer anderen möglichen Ausführungsform des erfindungsgemässen Konstruktionsvermessungsgeräts werden-in Ausrichtung des Laserstrahls auf die Objekt-Oberfläche-im Rahmen der Lotpunktfindungs-Funktionalität automatisch mindestens drei auf der Objekt-Oberfläche liegende Raumpunkte vermessen oder vorgegeben und eine durch diese drei Raumpunkte aufgespannte Ebene definiert. Der Schnittpunkt von dieser Ebene mit der Lotrechten wird berechnet, und anschliessend wird genau dieser Schnittpunkt als der zweite Raumpunkt mit dem Laserstrahl angefahren und markiert.

Erfindungsgemäß kann zudem im Rahmen der Lotpunktfindungs-Funktionalität automatisch der zweite Raumpunkt nach Erreichen desselben vermessen werden und eine Distanz als Höhenunterschied zwischen dem ersten und dem zweiten Raumpunkt durch die Auswerte- und Steuereinheit abgeleitet und dem Benutzer bereitgestellt werden.

Insbesondere ist die Anzieleinheit derart ausgebildet, dass der von der Laserquelle emittierbare Laserstrahl als Mess-und Markierlaserstrahl dient und anhand an der Objekt-Oberfläche reflektierter Anteile des Laserstrahls, die durch den Laserlicht-Detektor empfangen werden, die Distanz zu dem mit dem Laserstrahl angezielten Raumpunkt der Objekt-Oberfläche durch die Auswerte- und Steuereinheit ermittelbar ist.

Alternativ kann jedoch der Laserstrahl auch mehrere - z.B. auch von unterschiedlichen Quellen emittierte - Anteile aufweisen, insbesondere einen Anteil zur Verwendung als Markierlaserstrahl und einen Anteil zur Verwendung als Messlaserstrahl, der parallel oder koaxial zum Markierlaserstrahl ausgesendet wird. Die Anteile können dabei beispielsweise eine unterschiedliche Wellenlänge aufweisen, beispielsweise eine Wellenlänge im Bereich des sichtbaren Lichts für den Markierlaserstrahl und eine Wellenlänge im Bereich des IR- oder NIR-Lichts für den Messlaserstrahl. Dafür kann die Anzieleinheit auch derart ausgebildet sein, dass die Laserquelle zwei Teillaserquellen aufweist, die separat zur Aussendung eines ersten Anteils des Laserstrahls als Markierlaserstrahl im sichtbaren Wellenlängenbereich bzw. eines - koaxial oder geringfügig parallel versetzt zum Markierlaserstrahl verlaufenden - zweiten Anteils des Laserstrahls als Messlaserstrahl im nahen infraroten Wellenlängenbereich ausgebildet sind.

Insbesondere ist in die Anzieleinheit eine digitale Kamera integriert, dessen optische Achse im Wesentlichen koaxial zur Zielachse der Anzieleinheit ausgerichtet ist (d.h. die Kamera ist in jene Richtung ausgerichtet, in welche auch der Mess- und Markierlaserstrahl ausgesendet wird). Das Kamerabild, in welches ein Fadenkreuz an jener Stelle im Bild eingeblendet sein kann, welche mit der Zielachse korrespondiert, dient insbesondere zur Anzielung der gewünschten Zielpunkte im Raum und kann z.B. auf dem Display einer handhaltbaren Fernsteuereinheit für das Konstruktionsvermessungsgerät angezeigt werden (insbesondere als Live-Video-Stream).

Gemäss einer Weiterbildung der Erfindung können - zur Unterstützung des automatischen Lotpunktfindungs-Prozesses - auch Kamerabilder, die anhand von Bildbearbeitung ausgewertet werden, für die Bestimmung des gesuchten Lotpunktes herangezogen werden. Beispielsweise können anhand von einer Kantenextraktion in einem aufgenommenen Kamerabild die Grenzen von Wandflächen abgeleitet und Annahmen über die abgebildeten Flächen getroffen werden, z.B. ob es sich wahrscheinlich um eine Zimmer-Seitenwand, die Zimmer-Decke, den Zimmer-Boden oder eine Fläche einer Dachschräge handelt. Mithilfe dieser Annahmen kann der Findungsprozess für den Lotpunkt unterstützt und optimiert werden. Handelt es sich beispielhaft beim zu lotenden Ausgangspunkt (d.h. dem bekannten, ersten Raumpunkt) um einen Punkt, der mutmasslich auf dem Zimmer-Boden liegt, kann der Findungsprozess für den gesuchten lotrecht gegenüberliegenden Raumpunkt (als zweiter Raumpunkt) gleich an der mutmasslichen Zimmer-Decke gestartet werden, wofür als Startposition für den Lotpunktfindungs-Prozesses die Anzieleinheit auf einen Raumpunkt ausgerichtet werden kann, der auf jener Fläche innerhalb den Kantenbilds liegt, die als Zimmer-Decke angenommen wird.

Gegenstand der Erfindung ist auch ein Lotpunktfindungs-Verfahren mit einem erfindungsgemässen Konstruktionsvermessungsgerät nach einer der vorgenannten Ausführungsformen, wobei im Rahmen des Lotpunktfindungs-Verfahrens abhängig von einem bekannten, definierten ersten Raumpunkt die Ausrichtung der Anzieleinheit derart automatisch gesteuert durch die Auswerte- und Steuereinheit mittels des ersten und/oder des zweiten Drehantriebs geändert wird, dass genau ein solcher auf einer Objekt-Oberfläche liegender zweiter Raumpunkt mit dem Laserstrahl angefahren und markiert wird, der auf einer den ersten Raumpunkt enthaltenden Lotrechten liegt.

Dabei sollen insbesondere auch in einem definierten Toleranzbereich um die Lotrechte befindliche Raumpunkte als auf der Lotrechten liegend gelten.

Weitere Ausführungsformen des erfindungsgemässen Lotpunktfindungs-Verfahrens sind in den abhängigen Ansprüchen beschrieben bzw. oben bereits als Weiterbildungen von der erfindungsgemässen Lotpunktfindungs-Projektionsfunktionalität des Konstruktionsvermessungsgeräts analog beschrieben.

Ein weiterer Gegenstand der Erfindung ist ein Computerprogrammprodukt mit Programmcode, der auf einem maschinenlesbaren Träger gespeichert ist, zur Bereitstellung, Steuerung und Durchführung des erfindungsgemässen Verfahrens bzw. der Lotpunktfindungs-Funktionalität des erfindungsgemässen Konstruktionsvermessungsgeräts nach einer der vorgenannten Ausführungsformen. Vorzugsweise wird das Programm auf einer als Auswerte- und Steuereinheit des erfindungsgemässen Konstruktionsvermessungsgeräts ausgebildeten elektronischen Datenverarbeitungseinheit ausgeführt.

Das erfindungsgemässe Konstruktionsvermessungsgerät und das erfindungsgemässe Lotpunktfindungs-Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Figur 1: ein erfindungsgemässes Konstruktionsvermessungsgerät und illustrieren ein damit ausführbares Verfahren zur Vermessung einer Konstruktion,
- Figur 2: eine bevorzugte Ausführungsform der Erfindung,
- Figur 3: eine Situation, bei der eine Lotpunktfindung dadurch erschwert ist, dass der direkte optische Kontakt zwischen einem ersten Raumpunkt 1a und einem zweiten Raumpunkt 1b blockiert ist,
- Figur 4: eine Abwandlung eines erfindungsgemässen Konstruktionsvermessungsgeräts, das mit einer speziellen Funktionalität zur Detektion und genauen dreidimensionalen Vermessung von Kanten und/oder Ecken, insbesondere in einem Gebäuderaum, ausgestattet ist,
- Figur 5: eine Funktionalität, die mit einer weiteren Abwandlung eines Konstruktionsvermessungsgeräts, mit oder auch ohne Lotpunktfindungs-Funktionalität und/oder spezielle Funktionalität zur Detektion und genauen dreidimensionalen Vermessung von Kanten und/oder Ecken, ermöglicht wird, und
- Figur 6: eine weitere Funktionalität, genauer eine Funktionalität zur Anzeige eines Schwellenwertradius 51 um einen bereits vermessenen Raumpunkt 50 zur potentiellen, von einem Benutzer zu entscheidender Vermessung und Speicherung der Koordinaten weiterer Raumpunkte, die mit einer weiteren Abwandlung eines Konstruktionsvermessungsgeräts, ermöglicht wird.

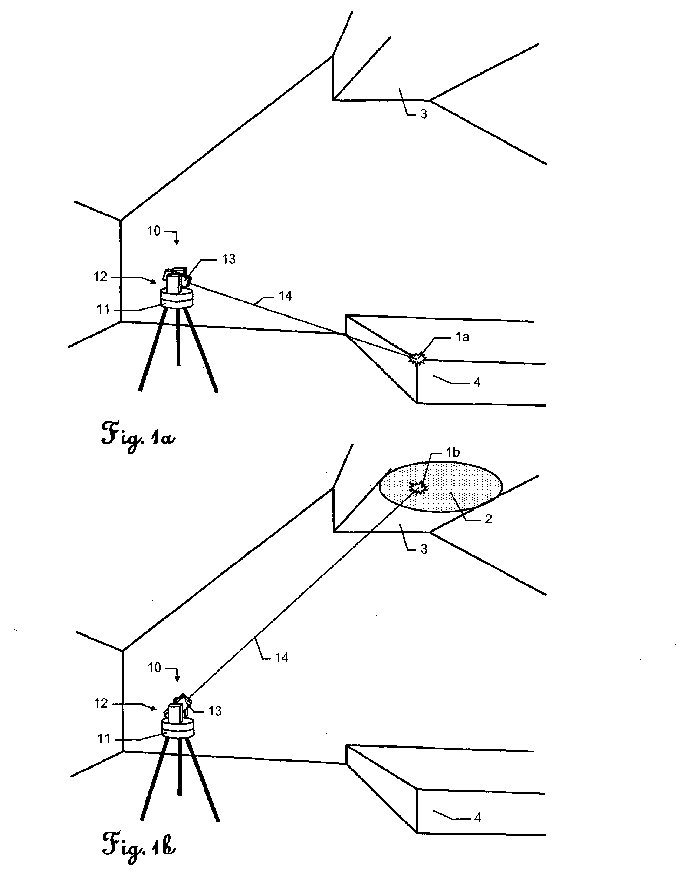

Die Figuren 1a und 1b illustrieren ein erfindungsgemässes Konstruktionsvermessungsgerät 10 und ein damit ausführbares Verfahren zur Vermessung einer Konstruktion, im Speziellen zur Bestimmung und Markierung der Lotrechten von einem definierten ersten Raumpunkt 1a an einer oberen Ecke eines Sockels 4 zu einem auf einer Objektoberfläche 3 liegenden zweiten Raumpunkt 1b. Die Referenzzahl 2 gibt, gemäss einer möglichen Ausführungsform der Erfindung, einen definierten Toleranzbereich 2 an, innerhalb dessen liegende Raumpunkte als auf der Lotrechten liegend gelten.

Das Konstruktionsvermessungsgerät 10 umfasst eine in diesem Beispiel als ein dreibeiniges Stativ ausgebildete Basis 11 mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor ausgestattet und stellt damit eine Distanzmessfunktionalität bereit.

Das Konstruktionsvermessungsgerät 10 umfasst des Weiteren eine vereinfachungshalber nicht dargestellte Auswerte- und Steuereinheit, wobei - ebenfalls zur Vereinfachung nicht dargestellt - ein erster und ein zweiter Drehantrieb das Oberteil 12 bzw. die Anzieleinheit 13 antreibbar bzw. ausrichtbar machen. Die räumliche Ausrichtung der Anzieleinheit 13 gegenüber der Basis 11 ist über zwei Winkelmesser erfassbar. Die Auswerte- und Steuereinheit ist mit der Laserquelle, dem Laserlicht-Detektor sowie den Winkelmessern verbunden, um eine erfasste Distanz einer entsprechenden Ausrichtung der Anzieleinheit 13 zuzuordnen und somit Koordinaten für Raumpunkte zu bestimmen.

Insbesondere ist zusätzlich ein zwei-achsiger Neigungssensor oder zwei ein-achsige Neigungssensoren vorgesehen, mit denen eine Neigung der Basis 11 gegenüber einer Horizontalebene, bezogen auf den Schwerefeld-Vektor der Erde, bestimmt werden kann. Zum einen wird dadurch die äussere Referenz der Lotrichtung festgelegt und zum anderen wird die aktuelle Ausrichtung der Basis 11 (und somit auch der Anzieleinheit 13 und des gesamten Geräts) gegenüber dieser äusseren Lotrichtung bestimmt. Im Allgemeinen ist mit einer solchen Zusatzausstattung mit Horizontierungs-oder Neigungssensoren eine ansonsten mühsam manuell zu erfolgende hochgenau horizontal ausgerichtete Aufstellung der Basis 11 bezüglich des Schwerefeld-Vektors der Erde nicht erforderlich, sondern kann rechnerisch durch die Auswerte- und Steuereinheit berücksichtigt werden (Stehachsfehlerkompensation).

Erfindungsgemäss weist das Konstruktionsvermessungsgerät 10 eine nach Auslösung zumindest teilweise automatisch ablaufende Lotpunktfindungs-Funktionalität auf, in deren Rahmen abhängig von dem bekannten, definierten ersten Raumpunkt 1a die Ausrichtung der Anzieleinheit 13 derart automatisch gesteuert durch die Auswerte- und Steuereinheit mittels des ersten und/oder des zweiten Drehantriebs geändert wird, dass genau der auf der Objekt-Oberfläche 3 liegende zweite Raumpunkt 1b mit dem Laserstrahl 14 angefahren und markiert wird (siehe Figur 1b).

Vorteilhaft kann automatisch nach Erreichen des zweiten Raumpunkts mit dem Laserstrahl dieser zweite Raumpunkt sogleich vermessen werden und eine Distanz als Höhenunterschied zwischen dem ersten und dem zweiten Raumpunkt durch die Auswerte- und Steuereinheit abgeleitet sowie dem Benutzer bereitgestellt werden.

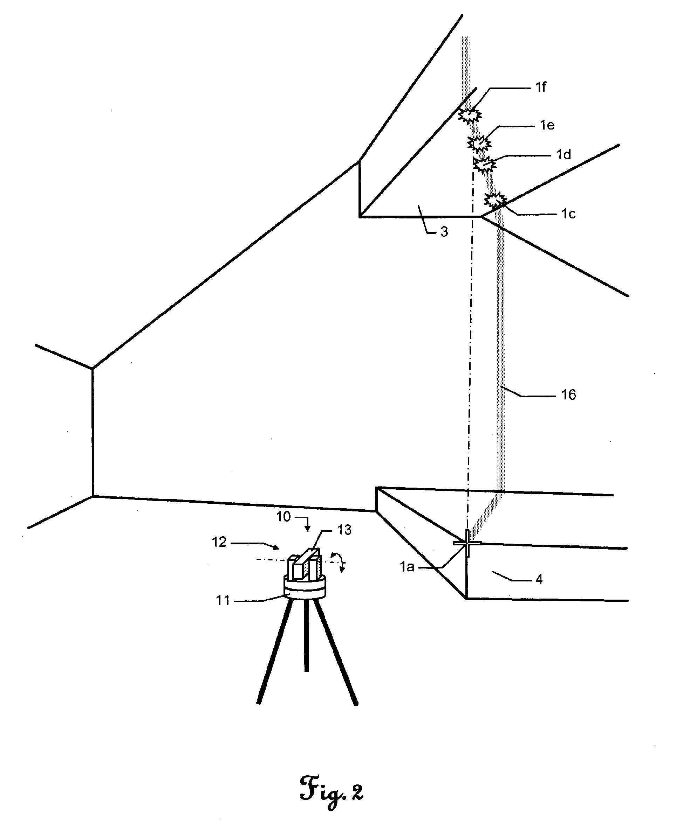

Figur 2 illustriert eine Ausführungsform der Erfindung, wobei im Rahmen der Lotpunktfindungs-Funktionalität für Bestimmung und Markierung der Lotrechten 15, ausgehend von dem ersten definierten Raumpunkt 1a, die Ausrichtung der Zieleinheit 13 automatisch iterativ sich dem zu markierenden Raumpunkt 1b (in Figur 2 nicht dargestellt) annähernd geändert wird und dabei, einer Spur 16 des Laserstrahls folgend, fortlaufend Raumpunkte 1c, 1d, 1e und 1f vermessen werden, bis der zweite Raumpunkt 1b mit dem Laserstrahl 14 erreicht wird.

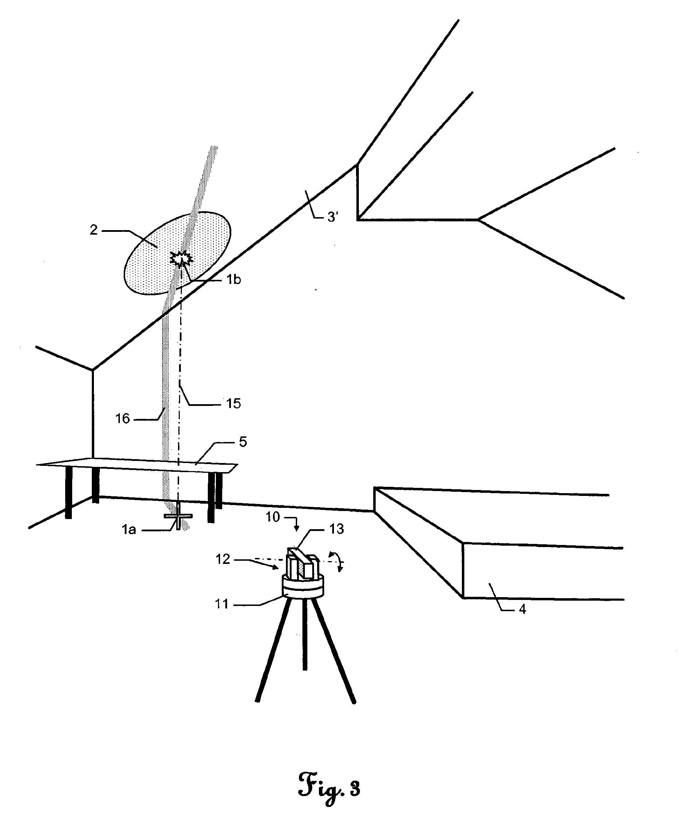

Figur 3 illustriert eine Situation, bei der eine Lotpunktfindung vom ersten definierten Raumpunkt 1a zur Objektoberfläche 3' mittels konventioneller einfacher Konstruktionsvermessungsgeräte, ohne Einsatz einer Totalstation oder eines Theodolithen kaum möglich wäre, da der direkte optische Kontakt zwischen dem Raumpunkt 1a und dem zweiten Raumpunkt 1b durch einen Tisch 5 blockiert ist.

Eine vergleichbare Situation kann auch so gegeben sein, dass ein Lot von einem Raumpunkt eines Stockwerks eines Rohbaus in ein nächstes Stockwerk - sozusagen "durch die Zwischendecke hindurch - bestimmt werden soll, wobei aber (beispielsweise durch ein offenes Treppenhaus oder einen offenen Fahrstuhlschacht) ein optischer Kontakt von dem erfindungsgemässen Konstruktionsvermessungsgerät zu den beiden Raumpunkten (d.h. des Ausgangspunkts, dessen Lotpunkt gesucht ist, und des dann im anderen Stockwerk zu suchenden Lotpunkts) gewährleistet ist.

Erfindungsgemäss kann dann, der Spur 16 des Laserstrahls 14 folgend, der zweite Raumpunkt 1b - gegebenenfalls innerhalb eines definierten Toleranzbereichs 2 - bestimmt und markiert werden.

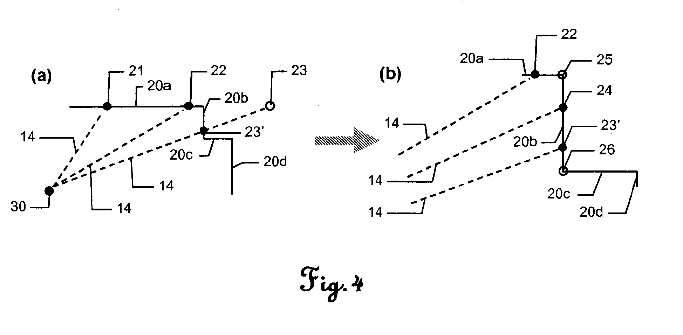

Figur 4 illustriert einen weiteren Aspekt bezüglich des erfindungsgemässen Konstruktionsvermessungsgeräts, das mit einer speziellen Funktionalität zur Detektion und genauen dreidimensionalen Vermessung von Kanten und/oder Ecken, insbesondere in einem Gebäuderaum, ausgestattet ist. Das Konstruktionsvermessungsgerät gemäss Figur 4 kann diese Funktionalität zusätzlich oder alternativ zu einer Lotpunktfindungs-Funktionalität, wie sie vorangehend beschrieben wurde, aufweisen. Das selbst nicht abgebildete Konstruktionsvermessungsgerät gemäss Figur 4, dessen Standort 30 im linken Teil der Figur 4 schematisch angedeutet ist, mit der speziellen Funktionalität zur Detektion und genauen Vermessung von Kanten und/oder Ecken, ist typischerweise ausgebildet wie entsprechend den vorangehenden Figuren 1a, 1b, 2 und 3, beispielsweise umfassend eine als ein Stativ ausgebildete Basis mit einem darauf drehbar gelagerten Oberteil. Eine am Oberteil schwenkbar gelagerte Anzieleinheit ist mit einer zu einer Emission eines Laserstrahls ausgebildeten Laserquelle und einem Laserlicht-Detektor ausgestattet und stellt damit eine Distanzmessfunktionalität bereit. Das Konstruktionsvermessungsgerät umfasst des Weiteren eine Auswerte- und Steuereinheit, Drehantriebe, mit denen das Oberteil bzw. die Anzieleinheit antreibbar bzw. ausrichtbar sind. Die räumliche Ausrichtung der Anzieleinheit gegenüber der Basis ist über Winkelmesser erfassbar. Die Auswerte-und Steuereinheit ist mit der Laserquelle, dem Laserlicht-Detektor sowie den Winkelmessern verbunden, um eine erfasste Distanz einer entsprechenden Ausrichtung der Anzieleinheit zuzuordnen und somit Koordinaten für Raumpunkte zu bestimmen.

Figur 4 illustriert dabei die Situation für die Vermessung einer gewinkelten Wand 20a, 20b, 20c, 20d vom Standpunkt 30 des Konstruktionsvermessungsgeräts aus.

Gemäss einer herkömmlichen Scan-Funktionalität eines Konstruktionsvermessungsgeräts werden zunächst die Scan-Ausgangsposition und die Scan-Richtung festgelegt, ein fixer Abstand zwischen aufeinanderfolgend zu vermessenden Raumpunkten vorgegeben, und dann das Gerät zur automatischen Vermessung der Polarkoordinaten der im definierten Abstand zueinander angeordneten Raumpunkte entlang des vorgegebenen Profils gestartet.

Gemäss einer solchen herkömmlichen Scan-Funktionalität mit fixen Scan-Intervallen würde die Anzieleinheit mit einem Laserstrahl zunächst den Raumpunkt 21, dann den Raumpunkt 22 und darauffolgend den virtuellen Raumpunkt 23 in Fortsetzungsrichtung des Wandteils 20a der abgewinkelten Wand anvisieren. Damit würde der Eckpunkt 25 bei der Vermessung ausgelassen.

Mithilfe der speziellen Funktionalität zur Detektion und genauen dreidimensionalen Vermessung von Kanten und/oder Ecken wird die Position sequentiell vermessener Raumpunkte automatisch auf Unregelmässigkeiten, wie sie beispielsweise Richtungsänderungen zu vermessender Wandteile 20a, 20b, 20c, 20d relativ zur Anzieleinheit entsprechen, analysiert. Bei Feststellung einer solchen Unregelmässigkeit wird automatisch ein Algorithmus gestartet zur kombinierten Vorberechnung/Vorbestimmung und Vermessung von Zwischenpunkten zwischen oder in der Umgebung von vermessenen Raumpunkten, für die Unregelmässigkeiten der beschriebenen Art festgestellt wurden (siehe Figur 4a). Mit Hilfe dieser Funktionalität, welche keine Bildaufnahme und Bildverarbeitung erfordert, wird es einem Bediener ermöglicht, automatisch das Profil einer Wand 20a, 20b, 20c, 20d mit den Raumpunkten 21, 22, 23', 24 und den Eckpunkten 25 und 26 zu vermessen. Optional kann es ermöglicht werden, diese zusätzliche Funktionalität auszuschalten, so dass ein Bediener eine festgestellte Unregelmässigkeit ignorieren kann und der Scan zum nächsten Scan-Punkt, gemäss der konventionellen Scan-Funktionalität, fortgesetzt wird.

Diese vorangehend beschriebenen automatisch vorprogrammiert ablaufenden Funktionalitäten konnten gemäss des Stands der Technik nur manuell und beispielsweise mit Totalstationen oder aufwendig ausgestatteten Scannern mit einer komplizierten Software erfüllt werden, wobei z.B. Totalstationen bei einer Aufspaltung eines Signals einer Laser-Entfernungsmessung eine Fehlermeldung angeben. Die Funktionalitäten für ein Konstruktionsvermessungsgerät wie beschreiben erlauben nun auch einem nicht speziell als Vermessungsexperte ausgebildeten Benutzer einfache dreidimensionale Vermessungen mit einem einfach zu bedienenden Gerät geringer Komplexität und ist besonders für Benutzung im Baugewerbe, beispielsweise durch Architekten, Küchen-Monteure, Treppenbauer und Maurer beim Innenausbau von Gebäuden, geeignet.

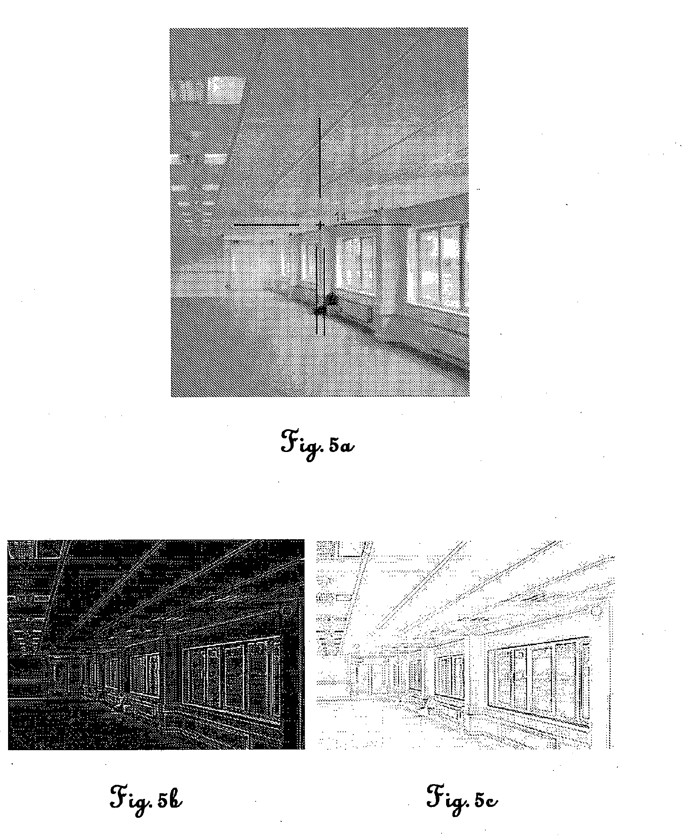

Die Figuren 5a bis 5c illustrieren eine Funktionalität, die mit einer weiteren Abwandlung eines Konstruktionsvermessungsgeräts, wie vorangehend beschrieben, mit oder auch ohne Lotpunktfindüngs-Funktionalität und/oder spezielle Funktionalität zur Detektion und genauen dreidimensionalen Vermessung von Kanten und/oder Ecken, ermöglicht wird, wobei als Voraussetzung das Konstruktionsvermessungsgerät mit einer (digitalen) Überblickskamera ausgestattet ist. Zusammen mit der nachfolgend beschriebenen Bildverarbeitungsfunktionalität zur Hervorhebung von Strukturkanten wird eine einfache Visualisierung und Identifikation von Details in einem Bild, beispielsweise mit geringem Kontrast oder aufgenommen in einer dunklen Umgebung bzw. bei geringer Beleuchtungslichtstärke, auch für einen nicht spezialisierten Bediener ermöglicht.

Figur 5a zeigt ein von der Überblickskamera aufgenommenes Bild, das nur einen schwachen Kontrast aufweist. Eingeblendet bzw. überlagert in das Bild ist ein Fadenkreuz, mit dem ein zu vermessender Raumpunkt als Ziel angezeigt werden soll. Aufgrund des schwachen Kontrasts und/oder unzureichender Beleuchtungslichtverhältnisse sind für eine präzise Anvisierung durch eine Anzieleinheit notwendige Details des abgebildeten Raums nicht oder nur schwer erkennbar.

Bei Aktivierung der erfindungsgemässen speziellen Bildverarbeitungsfunktionalität zur Hervorhebung von Strukturkanten werden die Bilddaten von der als Farb- oder Schwarzweissbildkamera ausgebildeten Überblickskamera in Schwarzweiss-Daten umgesetzt, wobei fliessende Intensitätsübergänge entsprechend einer kontinuierlichen Grauskala unterdrückt werden. Bildobjekte hoher oder niedriger Helligkeit werden in weiss oder schwarz dargestellt, ohne dazwischen befindliche Graustufen, wobei gemäss Figur 5b und 5c zwischen komplementärer SchwarzWeiss- oder Weiss-Schwarz-Darstellung für die Darstellung unterschiedlicher Bildhelligkeiten ausgewählt werden kann. Optional kann gemäss dieser Bildverarbeitungsfunktionalität ein Schwellenwert für die umzusetzende Helligkeit der Bildobjekte des Originalbildes in das kontrastverstärkende Schwarzweissbild einstellbar sein, ab dem Umsetzung in Schwarz oder Weiss erfolgt. Damit wird zusätzlich eine Kontrasterzeugung gemäss den aktuellen Bearbeitungsbedürfnissen für verschiedene Bildobjekte ermöglicht.

Ausserdem ist eine solche mit dieser Bildverarbeitungsfunktionalität erzeugte Darstellung auch leicht umsetzbar für eine automatische Erzeugung von Konstruktionszeichnungen.

Mit dieser Funktionalität wird es ermöglicht, Details wie beispielsweise Kanten leicht erkennbar zu machen für eine Vermessung, die mit einem regulären Teleskop einer Totalstation oder aus einem Realbild einer Kamera unter ungünstigen Aufnahmebedingungen nur schwer genau identifizierbar sind. Im Falle einer Vermessung mithilfe eines Teleskops wirken sich dabei, im Fall schwacher Beleuchtungslichtintensität, der begrenzte Durchmesser des Sichtfelds des Teleskops und beschränkte Lichtverstärkungsmöglichkeiten, im Vergleich zur Wahrnehmung mit dem menschlichen Auge, einschränkend aus. Insbesondere erübrigt sich bei Einsatz dieser Bildverarbeitungsfunktionalität eine spezielle Zielbeleuchtung oder eine exzentrische Messung.

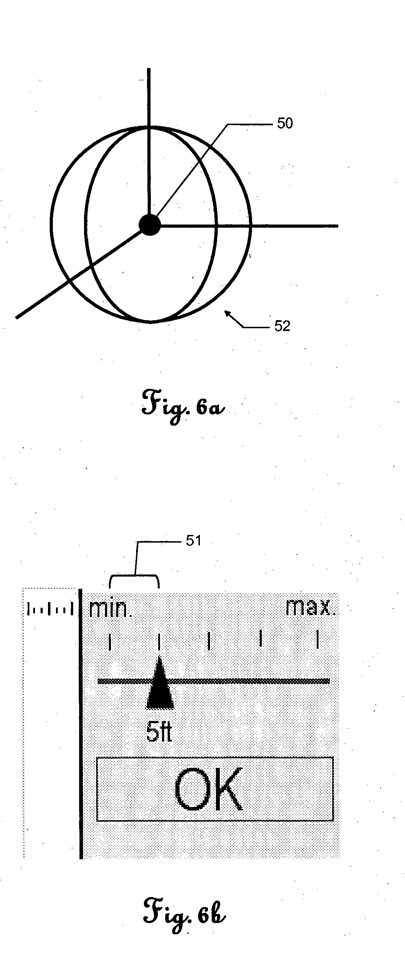

Die Figuren 6a und 6b illustrieren eine weitere Funktionalität, genauer eine Funktionalität zur Anzeige eines Schwellenwertradius 51 um einen bereits vermessenen Raumpunkt 50 zur potentiellen, von einem Benutzer zu entscheidender Vermessung und Speicherung der Koordinaten weiterer Raumpunkte, die mit einer weiteren Abwandlung eines Konstruktionsvermessungsgeräts, wie vorangehend beschrieben, ermöglicht wird.

Diese Funktionalität adressiert beispielsweise die Aufgabenstellung, wenn ein Benutzer eine Linie zu einem Raumpunkt, beispielsweise einem bereits zuvor vermessenen Eckpunkt zwischen zueinander abgewinkelten Wandteilen, verbinden will.

Mittels der Schwellenwertradius-Funktionalität wird eine virtuelle Kugel 52 (siehe Figur 7a) mit einem vom Benutzer zu definierenden Schwellenwert-Radius 51 (siehe Figur 7b) erzeugt und dem Benutzer angezeigt, ob ein (erneut) anvisierter Raumpunkt innerhalb des Schwellenwert-Radius 51 eines bereits zuvor vermessenen und gemäss seinen Koordinaten abgespeicherten Vermessungspunkts liegt.

Alternativ zur Schwellwertkugel kann ein Schwellenwertradius auch durch Definition (beispielsweise mittels Anmessung) von zwei zu einem Raumpunkt (insbesondere Eckpunkt) benachbarten weiteren Raumpunkten erfolgen, welche einen den Raumpunkt 50 enthaltenden virtuellen Zylinder, mit seiner Längsachse beispielsweise parallel oder orthogonal zu einer Wand ausgerichtet, definieren.

Die Schwellenwertradius-Funktionalität gibt dem Benutzer die Alternativen, die Vermessungswerte des alten Vermessungspunktes zu behalten, durch die Vermessungswerte des neuen Vermessungspunktes zu ersetzen, oder die Vermessungswerte für beide Vermessungspunkte zu speichern.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Konstruktionsvermessungsgerät (10) zum Vermessen und Markieren von Raumpunkten im Rahmen von Bau und/oder Ausbau - insbesondere Innenausbau - von Gebäuden, mit
- einer Basis (11),
- einem an der Basis (11) um eine Drehachse drehbar gelagerten Oberteil (12),
- einer am Oberteil (12) um eine Schwenkachse schwenkbar gelagerten, Distanzmessfunktionalität bereitstellenden Anzieleinheit (13) mit einer zur Emission eines Laserstrahls (14) ausgebildeten Laserquelle und einem Laserlicht-Detektor und
- einer Auswerte- und Steuereinheit,
wobei
- ein erster und ein zweiter Drehantrieb das Oberteil (12) bzw, die Anzieleinheit (13) antreib- und ausrichtbar machen,
- eine räumliche Ausrichtung der Anzieleinheit gegenüber der Basis (11) über zwei Winkelmessern erfassbar ist und
- die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Koordinaten für Raumpunkte zu bestimmen, und
- das Konstruktionsvermessungsgerät (10) eine nach Auslösung zumindest teilweise automatisch ablaufende Lotpunktfindungs-Funktionalität aufweist, in deren Rahmen abhängig von einem bekannten, definierten ersten Raumpunkt (1a) die Ausrichtung der Anzieleinheit (13) derart automatisch gesteuert durch die Auswerte- und Steuereinheit mittels des ersten und/oder des zweiten Drehantriebs änderbar ist, dass genau ein solcher auf einer Objekt-Oberfläche (3, 3') liegender zweiter Raumpunkt (1b) mit dem Laserstrahl (14) anfahrbar und markierbar ist, der auf einer den ersten Raumpunkt (1a) enthaltenden Lotrechten (15) mit einer als vertikal angenommenen Lotrichtung dem ersten Raumpunkt gegenüberliegt, insbesondere wobei auch innerhalb eines um die Lotrechte (15) definierten Toleranzbereichs (2) liegende Raumpunkte als auf der Lotrechten (15) liegend gelten,
**dadurch gekennzeichnet, dass**
- ein äusserer Bezug zur als vertikal angenommenen Lotrichtung herstellbar ist durch Neigungssensormittel, die zur Bestimmung der Neigung gegenüber dem Erdschwerefeld-Vektor um zwei Achsen und zur Übermittlung deren Messdaten an die Auswerte-und Steuereinheit ausgebildet sind, insbesondere wobei die Neigungssensormittel in die Basis (11) integriert sind, und
- im Rahmen der Lotpunktfindungs-Funktionalität automatisch der zweite Raumpunkt nach Erreichen desselben vermessbar ist und eine Distanz als Höhenunterschied zwischen dem ersten und dem zweiten Raumpunkt durch die Auswerte- und Steuereinheit abgeleitet und dem Benutzer bereitstellbar ist.

2. Konstruktionsvermessungsgerät (10) nach Anspruch 1, das dazu eingerichtet ist, die Ausrichtung der Anzieleinheit (13) automatisch einem Suchschema folgend zuändern und dabei Raumpunkte (1c, 1d, 1e, 1f) zu vermessen, bis der zweite Raumpunkt (1b) mit dem Laserstrahl (14) erreicht ist, insbesondere wobei im Rahmen der Lotpunktfindungs-Funktionalität die Ausrichtung der Anzieleinheit (13) solange automatisch iterativ sich dem zweiten Raumpunkt (1b) nähernd geändert wird und fortlaufend dabei Raumpunkte (1c, 1d, 1e, 1f) vermessen werden, bis der zweite Raumpunkt (1b) mit dem Laserstrahl (14) erreicht ist.

3. Konstruktionsvermessungsgerät (10) nach Anspruch 1 oder 2, das dazu eingerichtet ist,
im Rahmen der Lotpunktfindungs-Funktionalität automatisch folgende Schritte solange sich wiederholend durchzuführen, bis der zweite Raumpunkt mit dem Laserstrahl (14) erreicht ist:
- Vermessen eines aktuell angezielten Raumpunktes (1a),
- Ermitteln eines mathematischen Durchtrittpunkts von der Lotrechten (15) durch eine den aktuell angezielten Raumpunkt (1b) enthaltende horizontale Ebene (3, 3') und
- Ausrichten der Anzieleinheit (13) in Richtung des ermittelten Durchtrittspunkts.

4. Konstruktionsvermessungsgerät (10) nach einem der Ansprüche 1 bis 3, das dazu eingerichtet ist,
- in Ausrichtung der Anzieleinheit (13) auf den Azimutwinkel des ersten Raumpunkts (1a) - im Rahmen der Lotpunktfindungs-Funktionalität die elevative Ausrichtung der Anzieleinheit (13) zu variieren und fortlaufend dabei Raumpunkte (1c, 1d, 1e, 1f) zu vermessen, bis der zweite Raumpunkt (1b) mit dem Laserstrahl erreicht ist.

5. Konstruktionsvermessungsgerät (10) nach einem der Ansprüche 1 bis 4, das dazu eingerichtet ist,
- für den Fall, dass sich die Anzieleinheit (13) in einer vom Azimutwinkel des ersten Raumpunkts (1a) abweichenden azimutalen Ausrichtung befindet - im Rahmen der Lotpunktfindungs-Funktionalität die Anzieleinheit (13) zunächst automatisch auf den Azimutwinkel des ersten Raumpunkts (1a) auszurichten.

6. Konstruktionsvermessungsgerät (10) nach Anspruch 1 oder 2, das dazu eingerichtet ist,
in Ausrichtung des Laserstrahls (14) auf die Objekt-Oberfläche (3, 3') - im Rahmen der Lotpunktfindungs-Funktionalität automatisch mindestens drei auf der Objekt-Oberfläche (3, 3') liegende Raumpunkte zu vermessen oder vorzugeben eine durch diese drei Raumpunkte aufgespannte Ebene zu definieren und den Schnittpunkt von dieser Ebene mit der Lotrechten (15) zu berechnen sowie diesen Schnittpunkt als den ersten Raumpunkt mit dem Laserstrahl (14) anzufahren und zu markieren.

7. Konstruktionsvermessungsgerät (10) nach einem der Ansprüche 1 bis 6,
wobei die Anzieleinheit (13) derart ausgebildet ist,
- dass der von der Laserquelle emittierbare Laserstrahl (14) als Mess- und Markierlaserstrahl dient oder
- dass die Laserquelle zwei Teillaserquellen aufweist, die separat zur Aussendung eines ersten Anteils des Laserstrahls (14) als Markierlaserstrahl im sichtbaren Wellenlängenbereich bzw. eines - koaxial oder geringfügig parallel versetzt zum Markierlaserstrahl verlaufenden-zweiten Anteils des Laserstrahls (14) als Messlaserstrahl im nahen infraroten Wellenlängenbereich ausgebildet sind, und anhand an der Objekt-Oberfläche (3, 3') reflektierter Anteile des Laserstrahls (14), die durch den Laserlicht-Detektor empfangen werden, die Distanz zu dem mit dem Laserstrahl (14) angezielten Raumpunkt der Objekt-Oberfläche (3, 3') durch die Auswerte- und Steuereinheit ermittelbar ist.

8. Lotpunktfindungs-Verfahren mit einem Konstruktionsvermessungsgerät (10) zum Vermessen und Markieren von Raumpunkten im Rahmen von Bau und/oder Ausbau - insbesondere Innenausbau - von Gebäuden, mit
- einer Basis (11),
- einem an der Basis (11) um eine Drehachse drehbar gelagerten Oberteil (12),
- einer am Oberteil (12) um eine Schwenkachse schwenkbar gelagerten, Distanzmessfunktionalität bereitstellenden Anzieleinheit (13) mit einer zur Emission eines Laserstrahls (14) ausgebildeten Laserquelle und einem Laserlicht-Detektor und
- einer Auswerte- und Steuereinheit,
wobei
- ein erster und ein zweiter Drehantrieb das Oberteil (12) bzw. die Anzieleinheit (13) antreib- und ausrichtbar machen,
- eine räumliche Ausrichtung der Anzieleinheit gegenüber der Basis (11) über zwei Winkelmesser erfassbar ist und
- die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Koordinaten für Raumpunkte zu bestimmen,
und wobei im Rahmen des Lotpunktfindungs-Verfahrens abhängig von einem bekannten, definierten ersten Raumpunkt (1a) die Ausrichtung der Anzieleinheit (13) derart automatisch gesteuert durch die Auswerte- und Steuereinheit mittels des ersten und/oder des zweiten Drehantriebs geändert wird, dass genau ein solcher auf einer Objekt-Oberfläche (3, 3') liegender zweiter Raumpunkt (1b) mit dem Laserstrahl (14) angefahren und markiert wird, der auf einer den ersten Raumpunkt (1a) enthaltenden Lotrechten (15) mit einer als vertikal angenommenen Lotrichtung dem ersten Raumpunkt gegenüberliegt, insbesondere wobei auch innerhalb eines um die Lotrechte (15) definierten Toleranzbereichs (2) liegende Raumpunkte als auf der Lotrechten (15) liegend gelten,
**dadurch gekennzeichnet, dass**
- ein äusserer Bezug zur als vertikal angenommenen Lotrichtung hergestellt wird durch Neigungssensormittel, die zur Bestimmung der Neigung gegenüber dem Erdschwerefeld-Vektor um zwei Achsen und zur übermittlung deren Messdaten an die Auswerte-und Steuereinheit ausgebildet sind, insbesondere wobei die Neigungssensormittel in die Basis (11) integriert sind, und
- im Rahmen des Lotpunktfindungs-Verfahrens automatisch der zweite Raumpunkt nach Erreichen desselben vermessen wird und eine Distanz als Höhenunterschied zwischen dem ersten und dem zweiten Raumpunkt durch die Auswerte- und Steuereinheit abgeleitet und dem Benutzer bereitgestellt wird.

9. Lotpunktfindungs-Verfahren nach Anspruch 8,
wobei im Rahmen der Lotpunktfindungs-Funktionalität die Ausrichtung der Anzieleinheit (13) automatisch einem Suchschema folgend geändert wird und dabei Raumpunkte vermessen werden, bis der zweite Raumpunkt (1b) mit dem Laserstrahl (14) erreicht ist,
insbesondere wobei im Rahmen der Lotpunktfindungs-Funktionalität die Ausrichtung der Anzieleinheit (13) solange automatisch iterativ sich dem zweiten Raumpunkt (1b) nähernd geändert wird und fortlaufend dabei Raumpunkte vermessen werden, bis der zweite Raumpunkt (1b) mit dem Laserstrahl (14) erreicht ist.

10. Lotpunktfindungs-Verfahren nach Anspruch 8 oder 9, wobei im Rahmen der Lotpunktfindungs-Funktionalität automatisch folgende Schritte solange sich wiederholend durchgeführt werden, bis der zweite Raumpunkt (1b) mit dem Laserstrahl (14) erreicht ist:
- Vermessen eines aktuell angezielten Raumpunktes,
- Ermitteln eines mathematischen Durchtrittpunkts von der Lotrechten (15) durch eine den aktuell angezielten Raumpunkt enthaltende horizontale Ebene und
- Ausrichten der Anzieleinheit (13) in Richtung des ermittelten Durchtrittspunkts.

11. Lotpunktfindungs-Verfahren nach einem der Ansprüche 8 bis 10,
wobei - in Ausrichtung der Anzieleinheit (13) auf den Azimutwinkel des ersten Raumpunkts (1a) - im Rahmen der Lotpunktfindungs-Funktionalität die elevative Ausrichtung der Anzieleinheit (13) variiert wird und fortlaufend dabei Raumpunkte vermessen werden, bis der zweite Raumpunkt (1b) mit dem Laserstrahl (14) erreicht ist.

12. Lotpunktfindungs-Verfahren nach einem der Ansprüche 8 bis 11,
wobei - für den Fall, dass sich die Anzieleinheit (13) in einer vom Azimutwinkel des ersten Raumpunkts (1a) abweichenden azimutalen Ausrichtung befindet - im Rahmen der Lotpunktfindungs-Funktionalität die Anzieleinheit (13) zunächst automatisch auf den Azimutwinkel des ersten Raumpunkts (1a) ausgerichtet wird.

13. Lotpunktfindungs-Verfahren nach Anspruch 8 oder 9,
wobei - in Ausrichtung des Laserstrahls (14) auf die Objekt-Oberfläche (3, 3') - im Rahmen der Lotpunktfindungs-Funktionalität automatisch mindestens drei auf der Objekt-Oberfläche (3, 3') liegende Raumpunkte vermessen oder vorgegeben werden, eine durch diese drei Raumpunkte aufgespannte Ebene definiert wird und der Schnittpunkt von dieser Ebene mit der Lotrechten (15) berechnet wird sowie dieser Schnittpunkt als der erste Raumpunkt mit dem Laserstrahl (14) angefahren und markiert wird.

14. Computerprogrammprodukt mit Programmcode, der auf einem maschinenlesbaren Träger gespeichert ist, zur Bereitstellung, Steuerung und Durchführung des Lotpunktfindungs-Verfahren nach einem der Ansprüche 8 bis 13, insbesondere wenn das Programm auf einer als Auswerte- und Steuereinheit des Konstruktionsvermessungsgeräts (10) nach einem der Ansprüche 1 bis 7 ausgebildeten elektronischen Datenverarbeitungseinheit ausgeführt wird.

## Claims

1. Building surveying device (10) for measuring and marking spatial points in the course of construction and/or development - in particular interior finishing - of buildings, comprising
• a base (11),
• an upper part (12) supported on the base (11) such that it can rotate about a rotation axis,
• a sighting unit (13) supported on the upper part (12) such that it can pivot about a pivoting axis and providing distance measuring functionality, with a laser source designed for emitting a laser beam (14), and a laser light detector, and
• an evaluation and control unit,
wherein
• a first and a second rotary drive enable the upper part (12) and the sighting unit (13) to be driven and aligned,
• a spatial alignment of the sighting unit in relation to the base (11) can be acquired via two goniometers,
• the evaluation and control unit is connected to the laser source, the laser light detector and the goniometers in order to assign an acquired distance to a corresponding alignment and thus to determine coordinates for spatial points, and
• the building surveying device (10) has a plumb point finding functionality which, after being triggered, runs automatically, at least in part, and in the course of which the alignment of the sighting unit (13) can be changed under automatic control by the evaluation and control unit with the aid of the first and/or the second rotary drive and as a function of a known, defined first spatial point (1a) in such a way that precisely one such second spatial point (1b) lying on an object surface (3, 3') can be approached and marked by the laser beam (14), which lies opposite to the first spatial point on a vertical plumb line (15) having a perpendicular direction, assumed to be vertical, containing the first spatial point (1a), in particular wherein spatial points lying within a tolerance region (2) defined around the vertical plumb line (15) are also deemed to be lying on the vertical plumb line (15),
**characterized in that**,
• an outer reference with respect to the perpendicular direction, assumed to be vertical, can be produced by inclination sensor means, which are designed for determining the inclination relative to the Earth's gravitational field vector about two axes and for communicating the measurement data thereof to the evaluation and control unit, in particular wherein the inclination sensor means are integrated into the base (11), and
• in the course of the plumb point finding functionality the second spatial point can be automatically measured after the latter has been reached, and a distance is derived as a difference in height between the first and the second spatial point by the evaluation and control unit and can be provided to the user.

2. Building surveying device (10) according to Claim 1,
being adapted to change automatically the alignment of the sighting unit (13) following a search scheme and in this case to measure spatial points (1c, 1d, 1e, 1f) until the second spatial point (1b) is reached with the laser beam (14),
in particular wherein, in the course of the plumb point finding functionality, the alignment of the sighting unit (13) is changed automatically iteratively in a manner approaching the second spatial point (1b) and in this case spatial points (1c, 1d, 1e, 1f) are measured continuously until the second spatial point (1b) is reached with the laser beam (14).

3. Building surveying device (10) according to Claim 1 or 2,
being adapted, in the course of the plumb point finding functionality, to carry out automatically the following steps repeatedly until the second spatial point is reached with the laser beam (14):
• measuring a currently sighted spatial point (1a),
• determining a mathematical passage point of the vertical plumb line (15) through a horizontal plane (3, 3') containing the currently sighted spatial point (1b),
and
• aligning the sighting unit (13) in the direction of the passage point determined.

4. Building surveying device (10) according to any one of Claims 1 to 3,
being adapted - with the alignment of the sighting unit (13) with the azimuth angle of the first spatial point (1a) - in the course of the plumb point finding functionality to vary the elevative alignment of the sighting unit (13) and in this case to measure continuously spatial points (1c, 1d, 1e, 1f) until the second spatial point (1b) is reached with the laser beam.

5. Building surveying device (10) according to any one of Claims 1 to 4,
being adapted - for the case where the sighting unit (13) is situated with an azimuthal alignment deviating from the azimuth angle of the first spatial point (1a) - in the course of the plumb point finding functionality the sighting unit (13) to firstly align automatically with the azimuth angle of the first spatial point (1a).

6. Building surveying device (10) according to Claim 1 or 2,
being adapted - with the alignment of the laser beam (14) with the object surface (3, 3') - in the course of the plumb point finding functionality to automatically measure or predetermine at least three spatial points lying on the object surface (3, 3'), define a plane spanned by these three spatial points and calculate the point of intersection of said plane with the vertical plumb line (15), and approach and mark said point of intersection by the laser beam (14) as the first spatial point.

7. Building surveying device (10) according to any one of Claims 1 to 6,
wherein the sighting unit (13) is designed in such a way
• that the laser beam (14) that can be emitted by the laser source serves as measurement and marking laser beam, or
• that the laser source has two partial laser sources, which are designed separately for emitting a first portion of the laser beam (14) as marking laser beam in the visible wavelength range and respectively a second portion - running coaxially or slightly parallel in an offset fashion with respect to the marking laser beam - of the laser beam (14) as measurement laser beam in the near infrared wavelength range,
and, with the aid of portions of the laser beam (14) which are reflected at the object surface (3, 3') and are received by the laser light detector, the distance from that spatial point of the object surface (3, 3') which is sighted by means of the laser beam (14) can be determined by the evaluation and control unit.

8. Plumb point finding method with a building surveying device (10) for measuring and marking spatial points in the course of construction and/or development - in particular interior finishing - of buildings, comprising
• a base (11),
• an upper part (12) supported on the base (11) such that it can rotate about a rotation axis,
• a sighting unit (13) supported on the upper part (12) such that it can pivot about a pivoting axis and providing distance measuring functionality, with a laser source designed for emitting a laser beam (14), and a laser light detector, and
• an evaluation and control unit,
wherein
• a first and a second rotary drive enable the upper part (12) and the sighting unit (13) to be driven and aligned,
• a spatial alignment of the sighting unit in relation to the base (11) can be acquired via two goniometers, and
• the evaluation and control unit is connected to the laser source, the laser light detector and the goniometers in order to assign an acquired distance to a corresponding alignment and thus to determine coordinates for spatial points,
and wherein, in the course of the plumb point finding method, the alignment of the sighting unit (13) is changed under automatic control by the evaluation and control unit with the aid of the first and/or the second rotary drive and as a function of a known, defined first spatial point (1a) in such a way that precisely one such second spatial point (1b) lying on an object surface (3, 3') is approached and marked by the laser beam (14), which lies opposite to the first spatial point on a vertical plumb line (15) having a perpendicular direction, assumed to be vertical, containing the first spatial point (1a), in particular wherein spatial points lying within a tolerance region (2) defined around the vertical plumb line (15) are also deemed to be lying on the vertical plumb line (15),
**characterized in that**,
• an outer reference with respect to the perpendicular direction, assumed to be vertical, is produced by inclination sensor means, which are designed for determining the inclination relative to the Earth's gravitational field vector about two axes and for communicating the measurement data thereof to the evaluation and control unit, in particular wherein the inclination sensor means are integrated into the base (11), and
• in the course of the plumb point finding functionality the second spatial point is automatically measured after the latter has been reached, and a distance is derived as a difference in height between the first and the second spatial point by the evaluation and control unit and is provided to the user.

9. Plumb point finding method according to Claim 8,
wherein, in the course of the plumb point finding functionality, the alignment of the sighting unit (13) is changed automatically following a search scheme and in this case spatial points are measured until the second spatial point (1b) is reached with the laser beam (14),
in particular wherein, in the course of the plumb point finding functionality, the alignment of the sighting unit (13) is changed automatically iteratively in a manner approaching the second spatial point (1b) and in this case spatial points are measured continuously until the second spatial point (1b) is reached with the laser beam (14).

10. Plumb point finding method according to Claim 8 or 9,
wherein, in the course of the plumb point finding functionality, the following steps are automatically carried out repeatedly until the second spatial point (1b) is reached with the laser beam (14):
• measuring a currently sighted spatial point,
• determining a mathematical passage point of the vertical plumb line (15) through a horizontal plane containing the currently sighted spatial point,
and
• aligning the sighting unit (13) in the direction of the passage point determined.

11. Plumb point finding method according to any one of Claims 8 to 10,
wherein - with the alignment of the sighting unit (13) with the azimuth angle of the first spatial point (1a) - in the course of the plumb point finding functionality the elevative alignment of the sighting unit (13) is varied and in this case spatial points are continuously measured until the second spatial point (1b) is reached with the laser beam (14).

12. Plumb point finding method according to any one of Claims 8 to 11,
wherein - for the case where the sighting unit (13) is situated with an azimuthal alignment deviating from the azimuth angle of the first spatial point (1a) - in the course of the plumb point finding functionality the sighting unit (13) is firstly aligned automatically with the azimuth angle of the first spatial point (1a).

13. Plumb point finding method according to Claim 8 or 9,
wherein - with the alignment of the laser beam (14) with the object surface (3, 3') - in the course of the plumb point finding functionality at least three spatial points lying on the object surface (3, 3') are automatically measured or predetermined, a plane spanned by these three spatial points is defined and the point of intersection of said plane with the vertical plumb line (15) is calculated, and said point of intersection is approached and marked by the laser beam (14) as the first spatial point.

14. Computer program product comprising program code, which is stored on a machine-readable carrier, for providing, controlling and carrying out the plumb point finding method according to any one of Claims 8 to 13, in particular if the program is executed on an electronic data processing unit embodied as an evaluation and control unit of the building surveying device (10) according to any one of Claims 1 to 7.

## Revendications

1. Appareil de mesure de construction (10) pour mesurer et marquer des points dans l'espace dans le cadre de la construction et/ou de l'aménagement - en particulier de l'aménagement intérieur - de bâtiments avec
- une base (11),
- une partie supérieure (12) positionnée rotative autour d'un axe de rotation sur la base (11),
- une unité de ciblage (13), positionnée pivotante autour d'un axe de pivotement, qui met à disposition une fonctionnalité de mesure de distance, avec une source laser configurée pour l'émission d'un faisceau laser (14) et un détecteur de lumière laser et
- une unité d'exploitation et de commande
cependant
- qu'un premier et un second entraînement rotatif rendent la partie supérieure (12) et l'unité de ciblage (13) capable d'être entraînée et orientée,
- qu'une orientation spatiale de l'unité de ciblage par rapport à la base (11) peut être détectée par deux goniomètres,
- que l'unité d'exploitation et de commande est reliée à la source laser, au détecteur de lumière laser ainsi qu'aux goniomètres pour faire correspondre une distance détectée à une orientation correspondante et pour déterminer ainsi des coordonnées pour des points dans l'espace, et
- que l'appareil de mesure de construction (10) présente une fonctionnalité de recherche de point d'aplomb qui se déroule, après déclenchement, au moins partiellement automatiquement dans le cadre de laquelle, en fonction d'un premier point dans l'espace, défini et connu (1a), l'orientation de l'unité de ciblage (13) peut être modifiée en étant commandée de manière automatique par l'unité d'évaluation et de commande au moyen du premier et/ou du second entraînement rotatif de telle manière que précisément un tel second point dans l'espace (1b) qui se situe sur une surface d'objet (3, 3') peut être balayé par le faisceau laser (14) et marqué, point qui se situe en face du premier point dans l'espace sur une verticale (15) qui contient le premier point dans l'espace (1a) avec une direction d'aplomb supposée verticale, en particulier cependant qu'également des points dans l'espace situés à l'intérieur d'une plage de tolérance définie autour de la verticale (15) sont considérés comme étant situés sur la verticale (15),
**caractérisé en ce**
- **qu'**une référence extérieure à la direction d'aplomb supposée verticale peut être réalisée par des capteurs d'inclinaison qui sont configurés pour déterminer l'inclinaison par rapport au vecteur de la gravité de la terre autour de deux axes et pour transmettre leurs données de mesure à l'unité d'exploitation et de commande, en particulier cependant que les capteurs d'inclinaison sont intégrés dans la base (11) et
- **que**, dans le cadre de la fonctionnalité de recherche de point d'aplomb, le second point dans l'espace peut être mesuré automatiquement après avoir été atteint et qu'une distance peut être dérivée par l'unité d'exploitation et de commande comme différence de hauteur entre le premier et le second point dans l'espace et mise à disposition de l'utilisateur.

2. Appareil de mesure de construction (10) selon la revendication 1 qui est agencé pour modifier automatiquement l'orientation de l'unité de ciblage (13) en suivant un schéma de recherche en mesurant des points dans l'espace (1c, 1d, 1e, 1f) jusqu'à ce que le second point dans l'espace (1b) soit atteint avec le faisceau laser (14), en particulier cependant que, dans le cadre de la fonctionnalité de recherche de point d'aplomb, l'orientation de l'unité de ciblage (13) est modifiée automatiquement de manière itérative en s'approchant du second point dans l'espace (1b) en mesurant en continu des points dans l'espace (1c, 1d, 1e, 1f) jusqu'à ce que le second point dans l'espace (1b) soit atteint avec le faisceau laser (14).

3. Appareil de mesure de construction (10) selon la revendication 1 ou 2 qui est agencé pour exécuter automatiquement les étapes suivantes, dans le cadre de la fonctionnalité de recherche de point d'aplomb, en les répétant jusqu'à ce que le second point dans l'espace soit atteint avec le faisceau laser (14) :
- mesure d'un point dans l'espace actuellement ciblé (1a),
- détection d'un point de traversée mathématique de la verticale (15) à travers un plan horizontal (3, 3') qui contient le point dans l'espace actuellement ciblé (1 b) et
- orientation de l'unité de ciblage (13) en direction du point de traversée détecté.

4. Appareil de mesure de construction (10) selon l'une des revendications 1 à 3 qui est agencé pour faire varier l'orientation en élévation de l'unité de ciblage (13), dans le cadre de la fonctionnalité de recherche du point d'aplomb, lorsque l'unité de ciblage (13) est orientée sur l'angle azimutal du premier point dans l'espace (1a), en mesurant en continu des points dans l'espace (1c, 1d, 1e, 1f) jusqu'à ce que le second point dans l'espace (1b) soit atteint avec le faisceau laser (14).

5. Appareil de mesure de construction (10) selon l'une des revendications 1 à 4 qui est agencé, au cas où l'unité de ciblage (13) se trouve dans une orientation azimutale qui diverge de l'angle azimutal du premier point dans l'espace (1a), pour orienter, dans le cadre de la fonctionnalité de recherche du point d'aplomb, l'unité de ciblage (13) tout d'abord automatiquement sur l'angle azimutal du premier point dans l'espace (1a).

6. Appareil de mesure de construction (10) selon la revendication 1 ou 2 qui est agencé, lorsque le faisceau laser (14) est orienté sur la surface de l'objet (3, 3'), pour mesurer ou prédéfinir automatiquement, dans le cadre de la fonctionnalité de recherche du point d'aplomb, au moins trois points dans l'espace situés sur la surface de l'objet (3, 3'), pour définir un plan qui passe par ces trois points dans l'espace et pour calculer le point d'intersection de ce plan avec la verticale (15) ainsi que pour balayer ce point d'intersection avec le faisceau laser (14) et pour le marquer comme étant le premier point dans l'espace.

7. Appareil de mesure de construction (10) selon l'une des revendications 1 à 6, cependant que l'unité de ciblage (13) est configurée de telle manière
- que le faisceau laser (14) qui peut être émis par la source laser sert de faisceau laser de mesure et de marquage ou
- que la source laser présente deux sources laser partielles qui sont configurées séparées pour émettre une première portion du faisceau laser (14) comme faisceau laser de marquage dans la gamme de longueurs d'onde visibles ou d'une seconde portion du faisceau laser (14) qui est coaxiale ou décalée légèrement parallèlement au faisceau laser de marquage en tant que faisceau laser de mesure dans la gamme de longueurs d'onde infrarouges proches et qu'à l'aide des portions du faisceau laser (14) qui sont réfléchies à la surface de l'objet (3, 3'), qui sont reçues par le détecteur de lumière laser, la distance par rapport au point dans l'espace de la surface de l'objet (3, 3') qui est ciblé avec le faisceau laser (14) peut être déterminée par l'unité d'exploitation et de commande.

8. Procédé de recherche de point d'aplomb avec un appareil de mesure de construction (10) pour mesurer et marquer des points dans l'espace dans le cadre de la construction et/ou de l'aménagement - en particulier de l'aménagement intérieur - de bâtiments avec
- une base (11),
- une partie supérieure (12) positionnée rotative autour d'un axe de rotation sur la base (11),
- une unité de ciblage (13), positionnée pivotante autour d'un axe de pivotement, qui met à disposition une fonctionnalité de mesure de distance, avec une source laser configurée pour l'émission d'un faisceau laser (14) et un détecteur de lumière laser et
- une unité d'exploitation et de commande
cependant
- qu'un premier et un second entraînement rotatif rendent la partie supérieure (12) et l'unité de ciblage (13) capable d'être entraînée et orientée,
- qu'une orientation spatiale de l'unité de ciblage par rapport à la base (11) peut être détectée par deux goniomètres et
- que l'unité d'exploitation et de commande est reliée à la source laser, au détecteur de lumière laser ainsi qu'aux goniomètres pour faire correspondre une distance détectée à une orientation correspondante et pour déterminer ainsi des coordonnées pour des points dans l'espace,
et cependant que, dans le cadre du procédé de recherche de point d'aplomb, en fonction d'un premier point dans l'espace défini connu (1a), l'orientation de l'unité de ciblage (13) est modifiée en étant commandée de manière automatique par l'unité d'évaluation et de commande au moyen du premier et/ou du second entraînement rotatif de telle manière que précisément un tel second point dans l'espace (1b) qui se situe sur une surface d'objet (3, 3') est balayé par le faisceau laser (14) et marqué, point qui se situe sur une verticale (15) qui contient le premier point dans l'espace (1a) avec une direction d'aplomb supposée verticale, en particulier cependant que des points situés également à l'intérieur d'une plage de tolérance (2) définie autour de la verticale (15) sont considérés comme situés sur la verticale (15),
**caractérisé en ce**
- **qu'**une référence extérieure à la direction d'aplomb supposée verticale est réalisée par des capteurs d'inclinaison qui sont configurés pour déterminer l'inclinaison par rapport au vecteur de la gravité de la terre autour de deux axes et pour transmettre leurs données de mesure à l'unité d'exploitation et de commande, en particulier cependant que les capteurs d'inclinaison sont intégrés dans la base (11) et
- **que**, dans le cadre de la fonctionnalité de recherche de point d'aplomb, le second point dans l'espace est mesuré automatiquement après avoir été atteint et qu'une distance est dérivée par l'unité d'exploitation et de commande comme différence de hauteur entre le premier et le second point dans l'espace et mise à disposition de l'utilisateur.

9. Procédé de recherche de point d'aplomb selon la revendication 8, cependant que, dans le cadre de la fonctionnalité de recherche de point d'aplomb, l'orientation de l'unité de ciblage (13) est automatiquement modifiée en suivant un schéma de recherche en mesurant des points dans l'espace jusqu'à ce que le second point dans l'espace (1b) soit atteint avec le faisceau laser, en particulier cependant que dans le cadre de la fonctionnalité de recherche de point d'aplomb, l'orientation de l'unité de ciblage (13) est modifiée automatiquement de manière itérative en s'approchant du second point dans l'espace (1b) en mesurant en continu des points dans l'espace (1c, 1d, 1e, 1f) jusqu'à ce que le second point dans l'espace (1b) soit atteint avec le faisceau laser (14).

10. Procédé de recherche de point d'aplomb selon la revendication 8 ou 9, cependant que, dans le cadre de la fonctionnalité de recherche de point d'aplomb, les étapes suivantes sont répétées automatiquement jusqu'à ce que le second point dans l'espace (1 b) soit atteint avec le faisceau laser (14) :
- mesure d'un point dans l'espace actuellement ciblé,
- détection d'un point de traversée mathématique de la verticale (15) à travers un plan horizontal qui contient le point dans l'espace actuellement ciblé et
- orientation de l'unité de ciblage (13) en direction du point de traversée détecté.

11. Procédé de recherche de point d'aplomb selon l'une des revendications 8 à 10, cependant que, dans le cadre de la fonctionnalité de recherche de point d'aplomb, lorsque l'unité de ciblage (13) est orientée sur l'angle azimutal du premier point dans l'espace (1a), l'orientation en élévation de l'unité de ciblage (13) est variée en mesurant en continu des points dans l'espace jusqu'à ce que le second point dans l'espace (1 b) soit atteint avec le faisceau laser (14).

12. Procédé de recherche de point d'aplomb selon l'une des revendications 8 à 11, cependant que, dans le cadre de la fonctionnalité de recherche de point d'aplomb, au cas où l'unité de ciblage (13) se trouve dans une orientation azimutale qui diverge de l'angle azimutal du premier point dans l'espace (1a), l'unité de ciblage (13) est orientée tout d'abord automatiquement sur l'angle azimutal du premier point dans l'espace (1a).

13. Procédé de recherche de point d'aplomb selon la revendication 8 ou 9, cependant que, dans le cadre de la fonctionnalité de recherche de point d'aplomb, lorsque le faisceau laser (14) est orienté sur la surface de l'objet (3, 3'), au moins trois points dans l'espace situés sur la surface de l'objet (3, 3'), sont mesurés ou prédéfinis, un plan qui passe par ces trois points dans l'espace est défini et le point d'intersection de ce plan avec la verticale (15) est calculé ainsi que le point d'intersection est balayé avec le faisceau laser (14) et marqué comme étant le premier point dans l'espace.

14. Produit de programme d'ordinateur avec code de programme qui est mémorisé sur un support qui peut être lu par une machine pour la mise à disposition, la commande et l'exécution du procédé de recherche de point d'aplomb selon l'une des revendications 8 à 13, en particulier lorsque le programme est réalisé sur une unité de traitement électronique de données configurée comme unité de commande et d'exploitation de l'appareil de mesure de construction selon l'une des revendications 1 à 7.
